**Europäisches Patentamt**

**European Patent Office**

**Office européen des brevets**

(19)

(11) Numéro de publication : **0 306 402 B1**

# (12) FASCICULE DE BREVET EUROPEEN

(45) Date de publication du fascicule du brevet :
**22.07.92 Bulletin 92/30**

(21) Numéro de dépôt : **88402186.6**

(22) Date de dépôt : **30.08.88**

(51) Int. Cl.⁵ : **H04N 9/11,** H04N 1/10

(54) **Dispositif optique d'analyse d'images fixes en télévision, et analyseur comportant un tel dispositif.**

(30) Priorité : **04.09.87 FR 8712331**

(43) Date de publication de la demande :
**08.03.89 Bulletin 89/10**

(45) Mention de la délivrance du brevet :
**22.07.92 Bulletin 92/30**

(84) Etats contractants désignés :
**DE GB**

(56) Documents cités :
**FR-A- 2 540 319**
**US-A- 4 264 921**

(73) Titulaire : **THOMSON BROADCAST**
**17, rue du Petit Albi**
**F-95800 Cergy Saint Christophe (FR)**

(72) Inventeur : **Grimaldi, Jean-Luc**
**Thomson-CSF SCPI 19, avenue de Messine**
**F-75008 Paris (FR)**
Inventeur : **Dellion, Raymond**
**Thomson-CSF SCPI 19, avenue de Messine**
**F-75008 Paris (FR)**
Inventeur : **Michaud, Pierre**
**Thomson-CSF SCPI 19, avenue de Messine**
**F-75008 Paris (FR)**

(74) Mandataire : **Courtellemont, Alain et al**
**THOMSON-CSF SCPI**
**F-92045 PARIS LA DEFENSE CEDEX 67 (FR)**

EP 0 306 402 B1

**Description**

La présente invention concerne les dispositifs optiques d'analyse d'images fixes en télévision, du type à miroir oscillant et à capteur linéaire à éléments photosensibles.

De tels dispositifs sont connus où le miroir oscillant fait partie d'un système optique qui, à partir d'une image fixe disposée dans un plan objet, forme et déplace une image de l'image fixe dans un plan image où se trouve le capteur linéaire ; ceci permet une analyse ligne par ligne à l'aide du capteur. De manière à effectuer une analyse selon les trois couleurs primaires un disque porte-filtres permet d'insérer, entre l'image fixe à analyser et le capteur, successivement trois filtres correspondant aux trois analyses à effectuer.

Dans ces dispositifs connus l'image formée dans le plan image présente, du fait de la diffusion du système optique qui l'a formée, un décollement des zones sombres voisines des zones claires, par exemple sur les contours des objets éclairés.

La présente invention permet d'éviter ou, pour le moins, de réduire cet inconvénient. De plus l'invention permet l'utilisation de filtres colorés plus petits et donc moins coûteux que les filtres habituellement utilisés ; l'invention permet également soit de ne pas avoir de problème de réflexions de lumière des filtres vers le plan objet, soit, lorsque ce problème existe, de pouvoir le traiter par une inclinaison des filtres beaucoup plus faible que celle qui est nécessaire dans les dispositifs connus et qui engendre un phénomène de tache colorée.

Ceci est obtenu en ne formant dans le plan image qu'une partie de l'image fixe.

Selon l'invention un dispositif optique d'analyse d'images fixes en télévision, du type comportant, en série, sur le trajet optique du dispositif, un plan objet destiné à recevoir une image fixe à analyser, un miroir oscillant et un plan image, image du plan objet, dans lequel est disposé un capteur linéaire à éléments photosensibles, est caractérisé en ce que, dans le but d'éviter un décollement des zones sombres voisines des zones claires dans les images à analyser, il comporte des moyens d'occultation mobiles associés à un ensemble optique, pour sélectionner une zone rectiligne du plan objet afin que seule cette zone soit transmise vers le plan image pour obtenir une image et une seule, cette seule image étant située sur les éléments photosensibles du capteur, en ce que les moyens d'occultation comportent pour cela n fentes (n : entier au moins égal à 1), et en ce qu'un filtre est interposé dans le trajet optique du dispositif.

Il est à noter qu'il est connu par le brevet US-A-4 264 921 un dispositif optique d'analyse d'images comportant, en série dans un même trajet optique, une fente constituant un moyen d'occultation, un ensemble optique, un prisme, un plan objet destiné à recevoir une image à analyser et un plan image du plan objet, dans lequel est disposé un capteur linéaire à éléments photosensibles. Mais ce dispositif constitue un appareil de transmission d'images en couleur par fac-similé dans lequel l'utilisation d'une fente n'a pas été amenée par le souci d'éviter un décollement des zones sombres voisines des zones claires mais par le souci d'obtenir, dans le plan image, trois aires distinctes relatives aux trois couleurs primaires séparées à l'aide du prisme à partir d'une même source de lumière blanche. Il est à noter que, dans le brevet US-A-4 264 921, il n'est pas indiqué que le dispositif selon la figure 4 de ce brevet permet d'éviter le décollement sus-mentionné ; ceci est dû au fait que les aires sus-mentionnées sont trop larges, en raison de la dispersion par le prisme et donc que le décollement n'est pas évité. Ainsi le brevet US-A-264 921 n'incite pas à utiliser une fente pour résoudre le problème du décollement.

La présente invention sera mieux comprise et d'autres caractéristiques apparaîtront à l'aide de la description ci-après et des figures s'y rapportant, qui représentent :
  – la figure 1, le schéma d'un dispositif optique selon l'art connu ;
  – les figures 2 à 5, les schémas de dispositifs optiques selon l'invention.

Sur les différentes figures les éléments correspondants sont désignés par les mêmes repères.

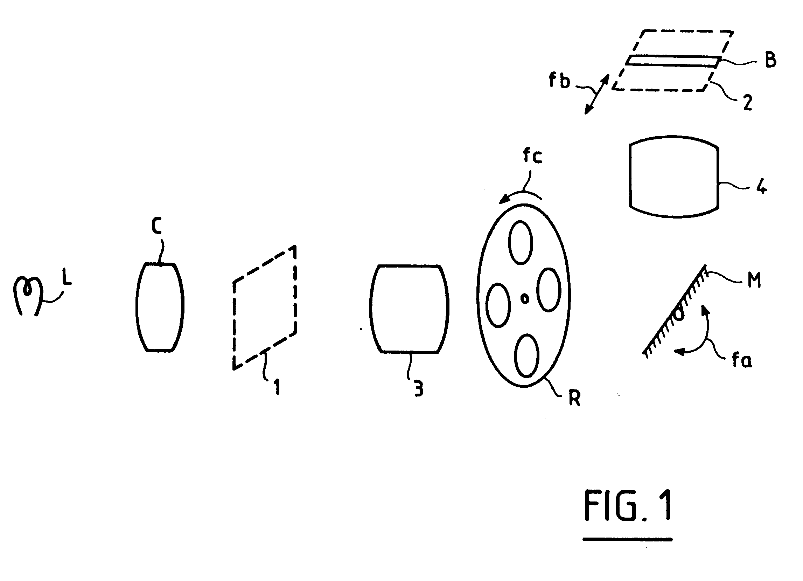

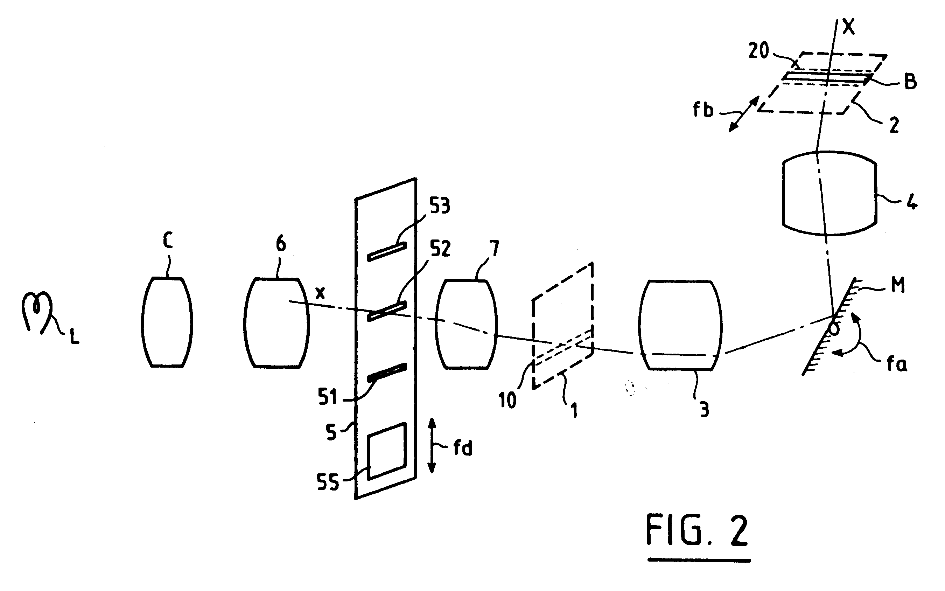

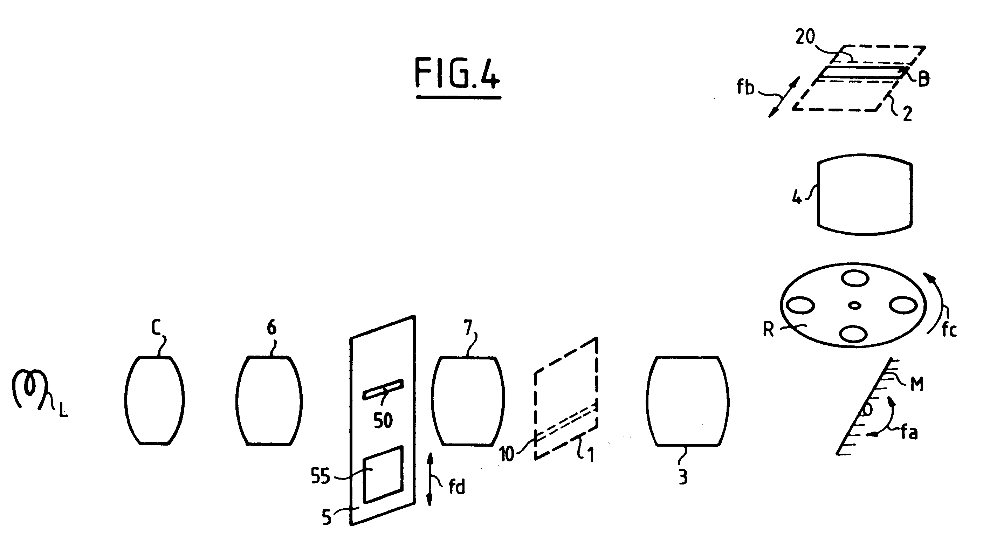

la figure 1 est une vue schématique d'un dispositif optique destiné à l'analyse, en télévision, d'images fixes constituées par des diapositives. Dans ce dispositif optique les diapositives sont placées dans un plan, 1, qui est généralement appelé plan objet ; le contour d'une diapositive est indiqué en traits discontinus, dans la position qu'elle occupe pour être analysée. Le plan objet est éclairé par une lampe L, à travers un condenseur C et un ensemble de filtres colorés destinés à éviter la transmission des rayons infrarouges et à obtenir la température de couleur souhaitée ; afin de simplifier le dessin et, ainsi, de mieux faire ressortir les éléments spécifiques à l'invention, ces filtres colorés n'ont pas été représentés sur la figure 1 ; ils ne le seront non plus pas sur les figures 2 et 4.

La lumière qui traverse la diapositive située dans le plan objet 1, traverse ensuite, successivement un objectif 3 et. un des quatre filtres d'un disque porte-filtre rotatif R. Le disque R comporte trois filtres d'analyse correspondant aux trois couleurs primaires et un filtre neutre, du point de vue colorimétrique, pour permettre une analyse des niveaux de blanc et de noir. Il est à noter que les filtres d'analyse ne sont pas dans un plan perpendiculaire à l'axe optique, non représenté, du dispositif mais sont inclinés à 15 degrés par rapport à ce plan afin d'éviter de renvoyer, par réflexion, de la lumière parasite sur la diapositive. Par une rotation du disque R autour de son axe, symbolisée par une flèche fc, il y a possibilité d'insérer, au choix, l'un de ces quatre filtres dans le trajet de la lumière provenant de la diapositive disposée dans le plan objet 1.

Après l'objectif 3 la lumière ayant traversé la diapositive est réfléchie sur un miroir oscillant M, dont le mouvement est symbolisé par une flèche fa, puis traverse un autre objectif 4 pour former dans un plan 2, généralement appelé plan image, une image de la diapositive ; le contour de l'image de la diapositive dans le plan image 2 a été indiqué en traits discontinus dans la position qu'elle occupe en fonction de la position du miroir M telle qu'elle est représentée sur la figure 1.

Dans le plan image 2 est disposée un capteur linéaire, B, fait d'éléments photosensibles. Par son mouvement d'oscillation le miroir M produit une translation de l'image de la diapositive dans le plan image 2 ; cette translation, symbolisée par une flèche fb, permet de faire défiler toute l'image de la diapositive devant les éléments photosensibles du capteur linéaire B, autorisant donc une analyse ligne par ligne de la diapositive à l'aide du capteur. Comme il a été indiqué au début de ce texte un tel dispositif présente des inconvénients et, en particulier, un décollement des zones sombres de l'image, voisines des zones claires. Pour y remédier, du moins assez fortement, il est proposé, comme le montrent les dispositifs optiques selon les figures 2 à 4, de ne transmettre qu'une partie du plan objet constituée par une zone rectiligne entourant la ligne à analyser à un instant donné dans la diapositive ; ainsi est évitée toute diffusion verticale à une distance supérieure à la demi-largeur de la surface éclairée.

La figure 2, se distingue de la figure 1 par la suppression du disque porte-filtres R et par l'adjonction, entre le condenseur C et le plan objet 1, d'un objectif 6 suivi d'un cache mobile 5, lui-même suivi d'un objectif 7. Le cache 5, dont le mouvement de translation est symbolisé par une flèche fd, comporte trois fentes 51, 52, 53 et un trou rectangulaire 55 ; trois filtres correspondant aux trois couleurs primaires sont respectivement disposés dans les fentes 51 à 53 tandis qu'un filtre neutre ferme le trou 55. Pour que la lumière parasite réfléchie par le filtre d'une fente ne revienne vers la fente, après une réflexion sur l'objectif 6, il suffit d'incliner ce filtre d'un degré et non pas de 15 degrés, comme dans le cas de la figure 1, le plan du filtre.

Une ligne brisée, XX, en traits d'axe, symbolise le trajet d'un rayon lumineux qui sort de l'objectif 6, traverse la fente 52 et le plan objet 1, et passe par le plan image 2. Dans le plan objet, 1, la seule zone qui reçoit de la lumière est une étroite bande rectiligne 10 dont le contour a été représenté en traits interrompus plus fins que les traits du contour de la diapositive. Ainsi, dans le plan image, ce n'est pas toute l'image de la diapositive qui est formée mais, grâce à l'occultation effectuée par le cache, simplement une étroite bande, 20. Par synchronisation entre le mouvement du miroir M et le mouvement du cache 5 il est possible de faire que cette bande recouvre la partie du plan image, 2, où se trouvent les éléments photosensibles du capteur linéaire B ; cette synchronisation, qui relève de la même technique que la synchronisation, du défilement d'un film dans un télécinéma à miroir oscillant, ne sera pas décrite pour ne pas rentrer dans des explications inutiles à la compréhension de l'invention ; simplement il est précisé que, dans l'exemple ayant servi pour la présente description, les éléments de contrôle servant à déterminer les positions respectives du cache 5 et du miroir M, sont constitués par des capteurs potentiométriques.

Ainsi, au fur et à mesure du déplacement du cache, les éléments photosensibles du capteur peuvent capter les signaux nécessaires à l'analyse ligne par ligne, selon les trois couleurs primaires, de la diapositive, les trois analyses étant respectivement effectuées avec les trois fentes.

Il est à noter que le trou 55 du cache 5 de la figure 2 pourrait être remplacé par une fente semblable aux fentes 51 à 53, à condition de munir cette fente d'un filtre neutre ; en fait le trou est plus adapté à une analyse rapide et succincte des niveaux de noir et de blanc telle qu'elle était demandée à l'appareil décrit.

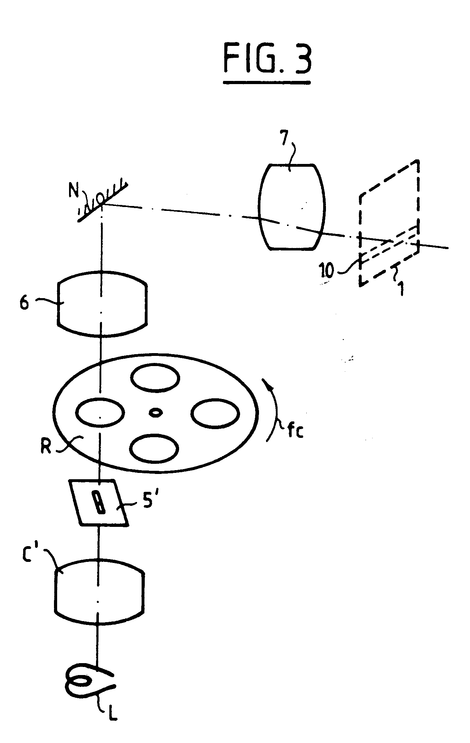

La figure 3 montre une variante de réalisation à la partie du dispositif optique, selon la figure 3, située entre la lampe L et le plan objet 1, le reste du dispositif n'étant pas modifié. Un trajet optique est réalisé entre la lampe L et le plan objet 1 ; il comporte successivement : un condenseur C' , un cache fixe, 5', à une seule fente, un disque porte-filtres R, un objectif 6, un miroir oscillant N et un objectif 7. Le miroir oscillant N, commandé en fonction du balayage à effectuer sur la diapositive, permet de donner de la fente une image qui balaie le plan objet 1 où se trouve la diapositive à analyser. Les filtres colorés sont placés dans le trajet d'éclairage de la diapositive, derrière la fente, au moyen du disque R ; ainsi, par rapport à la réalisation selon la figure 2, la masse mobile est réduite et, surtout, le mouvement de translation du cache est remplacé par un mouvement de rotation du disque porte-filtres. Cette réalisation selon la figure 3 présente un autre avantage vis-à-vis de celle selon la figure 2 : l'utilisation, pour le condenseur C', de lentilles cylindriques, et non plus sphériques comme dans le cas de la figure 2 ; ces lentilles concentrent, sur la fente fixe, une plus grande partie de la lumière émise par la lampe, ce qui permet d'utiliser des lampes de plus faible puissance et d'améliorer le bilan optique du dispositif.

La figure 4 se distingue de la figure 2 par le fait que le cache mobile 5 ne comporte plus qu'une fente 50 et un trou 55, tous les deux sans filtre, et qu'un disque porte-filtres mobile, R, du genre du disque R de la figure 1 est disposé entre le miroir oscillant M et l'objectif 4. Dans cette construction l'analyse selon les trois couleurs primaires se fait avec la même fente 50 en passant successivement par les trois filtres colorés du disque R. Il est à noter, par rapport à la figure 1, que les filtres n'ont pas été inclinés de 15 degrés mais de un degré.

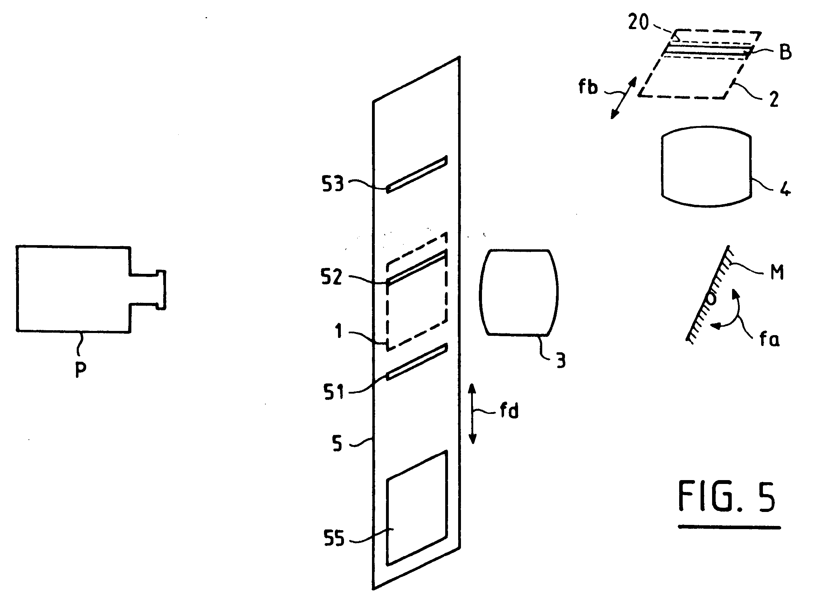

La figure 5 est une vue schématique d'un système optique destiné à l'analyse, en télévision, d'images fixes constituées par des images projetées par un projecteur P ; ainsi est défini un plan objet, 1, dans lesquelles sont projetées les images. Dans le plan objet 1 est disposé un cache mobile 5, semblable au cache mobile selon la figure 2, dont les trois fentes, 51 à 53, munies respectivement de trois filtres, permettent l'analyse, selon trois couleurs primaires, de l'image fixe ; le contour, dans le plan objet 1, de l'image fixe a été représenté en traits interrompus.

Derrière le cache 5 le dispositif optique comporte un objectif 3, un miroir M, un objectif 4 et un capteur linéaire B semblables à ceux de la figure 2. Et cet ensemble fournit, de l'image fixe contenue dans le plan objet 1, une image mobile située dans un plan image, 2, contenant les éléments photosensibles du capteur B. Cette image mobile, comme dans le cas des figures 2 et 3, est réduite à une étroite bande rectiligne, 20, qui recouvre les éléments photosensibles du capteur, grâce aux fentes et à une commande en synchronisme des déplacements du cache 5 et du miroir M ; selon la fente utilisée pour occulter la lumière provenant du projecteur il est ainsi possible d'effectuer une analyse ligne par ligne, selon l'une des trois couleurs primaires, à partir des signaux fournis par les éléments photosensibles du capteur.

La présente invention n'est pas limitée aux exemples décrits à l'aide des figures 2 à 5 ; c'est ainsi, en particulier, qu'elle s'applique, en télévision noir et blanc, à l'analyse d'images contenues dans un plan fixe. De même le cache peut comporter des groupes de fentes nécessaires à l'analyse selon les trois couleurs primaires : plusieurs groupes successifs de trois fentes à filtres telles que le groupe 51 à 52 sur les figures 2 et 5 ou une succession de fentes sans filtres telles que la fente du cache 5′ de la figure 3 ou que la fente 50 sur la figure 4. Quant aux trous, tels que 55 sur les figures 2, 4 et 5, ils peuvent ne pas exister ou éventuellement être remplacés par un retrait total du cache 5.

**Revendications**

1. Dispositif optique d'analyse d'images fixes en télévision, du type comportant, en série sur le trajet optique (XX) du dispositif, un plan objet destiné (1) à recevoir une image fixe à analyser, un miroir oscillant (M) et un plan image (2), image du plan objet, dans lequel est disposé un capteur linéaire (B) à éléments photosensibles, caractérisé en ce que, dans le but d'éviter un décollement des zones sombres voisines des zones claires dans les images à analyser, il comporte des moyens d'occultation mobiles (5 ; 5′, N) associés à un ensemble optique (6, 7), pour sélectionner une zone rectiligne (10) du plan objet afin que seule cette zone soit transmise vers le plan image pour obtenir une image (20) et une seule, cette seule image étant située sur les éléments photosensibles du capteur, en ce que les moyens d'occultation comportent pour cela n fentes (50 ; 51-53) (n : entier au moins égal à 1), et en ce qu'un filtre est interposé dans le trajet optique du dispositif.

2. Dispositif optique selon la revendication 1, dans lequel l'image fixe à analyser est une diapositive, caractérisé en ce que les moyens d'occultation sont disposés en amont du plan objet (1) sur le trajet optique (XX) du dispositif.

3. Dispositif optique selon la revendication 1, dans lequel l'image fixe à analyser est une image fournie par un projecteur (P), caractérisé en ce que les moyens d'occultation (5) sont disposés dans le plan objet (1).

4. Dispositif optique selon la revendication 2, caractérisé en ce que les moyens d'occultation comportent un cache (5) muni d'au moins une fente (51-53) et en ce que ce cache est mobile dans un plan perpendiculaire au trajet optique (XX).

5. Dispositif optique selon la revendication 2, caractérisé en ce que les moyens d'occultation comportent un cache fixe (5′) percé d'une fente, suivi, sur le trajet optique (XX), d'un miroir oscillant (N).

6. Dispositif optique selon la revendication 5, caractérisé en ce que la fente est précédée, sur le trajet optique (XX′) d'une lentille cylindrique (C′).

7. Dispositif optique selon l'une des revendications 1 à 4, dans lequel n est au moins égal à 3, caractérisé en ce que 3 fentes (51-53) comportent chacune un filtre coloré, les trois filtres de ces trois fentes correspondant respectivement à trois couleurs primaires distinctes et pouvant être choisis pour constituer le filtre interposé dans le chemin optique du dispositif.

8. Dispositif selon l'une des revendications 1 à 6, caractérisé en ce qu'un disque porte-filtres (R) est inséré dans le trajet optique (XX), en ce que n = 1, et en ce que la position du disque est choisie pour que l'un des filtres qu'il porte soit le filtre interposé dans le chemin optique du dispositif.

9. Analyseur d'images fixes, caractérisé en ce qu'il comporte un dispositif selon l'une quelconque des revendications précédentes.

**Patentansprüche**

1. Optische Anordnung zur Fernseh-Standbildabtastung, die längs ihrer optischen Bahn (XX) hintereinander eine Objektebene (1) zur Aufnahme eines abzutastenden Standbildes, einen Schwingspiegel (M) und eine Bildebene (2) des Bildes der Objektebene, in der eine Detektorzeile (B) mit lichtempfindlichen Elementen angeordnet ist, enthält, dadurch gekennzeichnet, daß sie zur Vermeidung des Abhebens dunkler Zonen, die in den abzutastenden Bildern hellen Zonen benachbart liegen, bewegliche Abdeckmittel (5; 5′, N) enthält, die eine Optik-Baugruppe (6, 7) zugeordnet sind, um eine geradlinige Zone (10) der Objektebene auszuwählen, damit nur diese Zone zur Bildebene übertragen wird, um nur ein einziges Bild (20) zu erhalten, wobei dieses einzige Bild auf den lichtempfindlichen Elementen des Aufnehmers liegt, daß die Abdeckmittel zu diesem Zweck n Schlitze (50; 51 bis 53) aufweisen (wobei n ganzzahlig ist und wenigstens den Wert 1 hat), und daß in die optische Bahn der Vorrichtung ein Filter eingefügt ist.

2. Optische Vorrichtung nach Anspruch 1, bei welcher das abzutastende Standbild ein Diapositiv ist, dadurch gekennzeichnet, daß die Abdeckmittel in der optischen Bahn (XX) der Vorrichtung vor der Objektebene (1) angeordnet sind.

3. Optische Vorrichtung nach Anspruch 1, bei welcher das abzutastende Standbild ein von einem Projektor (P) geliefertes Bild ist, dadurch gekennzeichnet, daß die Abdeckmittel (5) in der Objektebene (1) angeordnet sind.

4. Optische Vorrichtung nach Anspruch 2, dadurch gekennzeichnet, daß die Abdeckmittel eine wenigstens mit einem Schlitz (51-53) versehene Maske (5) enthalten und daß diese Maske in einer zur optischen Bahn (XX) senkrechten Ebene beweglich ist.

5. Optische Vorrichtung nach Anspruch 2, dadurch gekennzeichnet, daß die Abdeckmittel eine feste Maske (5′) enthalten, die von einem Schlitz durchdrungen ist und auf die in der optischen Bahn (XX) ein Schwingspiegel (N) folgt.

6. Optische Vorrichtung nach Anspruch 5, dadurch gekennzeichnet, daß dem Schlitz in der optischen Bahn (XX′) eine Zylinderlinse (C′) vorangeht.

7. Optische Vorrichtung nach einem der Ansprüche 1 bis 4, bei welchem n wenigstens den Wert 3 hat, dadurch gekennzeichnet, daß 3 Schlitze (51-53) jeweils ein Farbfilter enthalten, wobei die drei Filter der drei Schlitze jeweils drei voneinander verschiedenen Hauptfarben entsprechen und so gewählt werden können, daß sie das in den optischen Weg der Vorrichtung eingefügte Filter bilden.

8. Vorrichtung nach einem der Ansprüche 1 bis 6, dadurch gekennzeichnet, daß in die optische Bahn (XX) eine Filterträgerscheibe (R) eingefügt ist, daß n den Wert 1 hat und daß die Position der Scheibe so gewählt ist, daß eines der von ihr getragenen Filter das in die optische Bahn der Vorrichtung eingefügte Filter ist.

9. Standbildabtaster, dadurch gekennzeichnet, daß er eine Vorrichtung nach einem der vorhergehenden Ansprüche enthält.

## Claims

1. Optical device for the analysis of still images in television, of the type comprising, in series on the optical path (XX) of the device, an object plane (1) for receiving a still image to be analysed, an oscillating mirror (M) and an image plane (2) which is an image of the object plane, in which is disposed a linear sensor (B) with photosensitive elements, characterised in that, with the object of avoiding separation of dark areas adjacent to light areas in the images to be analysed, it comprises movable occulting means (5; 5′, N) associated with an optical assembly (6, 7), for selecting a rectilinear area (10) of the object plane so that only this area is transmitted to the image plane to obtain an image (20) and only one image, this sole image being situated on the photosensitive elements of the sensor, in that the occulting means comprise n slots (50; 51-53) therefor (n is an integer at least equal to 1), and in that a filter is interposed in the optical path of the device.

2. Optical device according to claim 1, in which the still image to be analysed is a transparency, characterised in that the occulting means are arranged upstream of the object plane (1) on the optical path (XX) of the device.

3. Optical device according to claim 1, in which the still image to be analysed is an image provided by a projector (P), characterised in that the occulting means (5) are arranged in the object plane (1).

4. Optical device according to claim 2, characterised in that the occulting means comprise a mask (5) provided with at least one slot (51-53) and in that this mask is movable in a plane perpendicular to the optical path (XX).

5. Optical device according to claim 2, characterised in that the occulting means comprise a fixed mask (5′) having a slot, followed, on the optical path (XX), by an oscillating mirror (N).

6. Optical device according to claim 5, characterised in that the slot is preceded on the optical path (XX′) by a cylindrical lens (C′).

7. Optical device according to any of claims 1 to 4, in which n is at least equal to 3, characterised in that 3 slots (51-53) each comprise a coloured filter, the three filters of these three slots respectively corresponding to three distinct primary colours and capable of being selected to form the filter interposed in the optical path of the device.

8. Device according to any of claims 1 to 6, characterised in that a filter carrying disc (R) is inserted in the optical path (XX), in that n = 1, and in that the position of the disc is selected so that one of the filters which it carries is the filter interposed in the optical path of the device.

9. Still image analyser, characterised in that it comprises a device according to any of the preceding claims.

FIG. 1

FIG. 2

EP 0 306 402 B1

# FIG. 3

FIG.4

EP 0 306 402 B1

FIG. 5